# EUROPÄISCHE PATENTSCHRIFT

(11) **EP 1 343 852 B1**
(45) Veröffentlichungstag und Bekanntmachung des Hinweises auf die Patenterteilung: **22.02.2006**
(21) Anmeldenummer: 01271418.4
(22) Anmeldetag: 12.12.2001
(51) Int. Cl.: C09G 1/04, C09G 1/10

(54) **SYSTEM ZUR BESCHICHTUNG VON FUSSBÖDEN**
SYSTEM FOR COVERING FLOORS
SYSTEME POUR L'ENDUCTION DE SOLS

(30) Priorität: 21.12.2000 DE 10064413
(43) Veröffentlichungstag der Anmeldung: 17.09.2003
(73) Patentinhaber: ECOLAB INC., St. Paul, MN 55102-1390 (US)
(72) Erfinder: SCHEUVENS, Ulrike, 40699 Erkrath (DE); ROGMANN, Karl-Heinz, 40880 Ratingen (DE); FAUBEL, Heiko, 42929 Wermelskirchen (DE); DECKER, Michael, 42697 Solingen (DE)
(74) Vertreter: Sternagel, Fleischer, Godemeyer & Partner
(86) Internationale Anmeldenummer: PCT/EP2001/014561
(87) Internationale Veröffentlichungsnummer: WO 2002/050205

(56) Entgegenhaltungen:
- WO-A-98/27162
- US-A- 5 676 741
- US-A- 5 782 962
- DATABASE WPI Section Ch, Week 200034 Derwent Publications Ltd., London, GB; Class A25, AN 2000-394454 XP002195294 & JP 2000 136351 A (KURARAY CO LTD), 16. Mai 2000 (2000-05-16)

## Beschreibung

Die vorliegende Erfindung beschäftigt sich mit Beschichtungssysteme für Fußböden, die trotz regelmäßiger Reinigung und/oder Desinfektion mit Mitteln, die antimikrobielle Komponenten enthalten, wenig oder gar nicht vergilben bzw. verfärben.

Unter Fußbodenpflegemittel auf Basis von Polymeren versteht der Fachmann im allgemeinen der Regel klassische durch naßchemische Behandlung wiederentfernbare Pflegemittel. Diese wiederentfernbaren Pflegemittel sind gegenüber Desinfektionsmitteln, insbesondere solchen auf Basis von Alkylaminen, quartären Ammoniumverbindungen, Alkoholen, aber auch anderen anfällig und entsprechen nicht mehr den gestiegenen Ansprüchen der Verbraucher. Insbesondere Verfleckungen durch Haut- und Händedesinfektionsmittel wie weiß durch Alkohol/Wasser und farbig durch Markierungsstoffe sowie Vergilbungen durch Flächendesinfektionsmittel beispielsweise auf Basis von quatären Ammoniumverbindungen sowie aminischen Wirkstoffen führen immer noch zu Beanstandungen bei den Gebäude-Verantwortlichen aufgrund der optischen Beeinträchtigungen. Diese Probleme werden vor allem in Krankennäusern beobachtet. Sie kommen aber auch in abgeschwächter Form in einer Umgebung vor, wo Reinigungs- und/oder Desinfektionsmitteln verwendet werden, die die genannten Komponenten enthalten.

Aufgrund der Nachteile von klassischen wiederentfernbaren Pflegemitteln beobachtet man in der letzten Zeit immer häufiger, daß Nicht-Metall gekoppelte Polyacrylate in Beschichtungsfilmen zum Einsatz kommen, was zur Folge hat, daß die resultierenden Pflegefilme naßchemisch schwer bis nicht mehr entfernbar sind. Ein Beispiel hierfür sind mit Arizidin vernetzte Filme auf Polyacrylat-Basis. Theoretisch gesehen müßten diese Pflegefilme auch nie mehr entfernt werden, wenn der oder die Nutzfilme immer früh genug erneuert würden. Die Praxis hat aber gezeigt, daß dies nicht umgesetzt wird bzw. der nicht entfernbare Pflegefilm häufig geschädigt wird und danach in aufwendiger Weise mechanisch abgetragen werden muß. Hinzu kommt, daß auch beim Schleifprozeß die Kontrolle über die Schleifwirkung begrenzt ist, und des öfteren Schäden am Belag auftreten.
Deshalb waren Schleifprozesse auf elastischen Fußböden wie zum Beispiel PVC, Linoleum, Gummi bisher nicht üblich bzw. wurden von den Belagsherstellem bis vor kurzem ausgeschlossen.

Demzufolge war es die Aufgabe der vorliegenden Erfindung, Beschichtungssysteme zur Verfügung zu stellen, bei denen die äußere Schicht sozusagen als Opferschicht dienen und naßchemisch einfach entfernbar sein, gleichzeitig aber die Verfärbungsanfälligkeit dieser einfach entfernbaren Opferschicht gegenüber antimikrobiellen Komponenten gering sein soll.

Wie auch aus dem Beispielteil der vorliegenden Erfindung hervorgeht, sind keine naßchemisch einfach entfernbaren, gleichzeitig geringe Verfärbungsanfälligkeit aufweisende Pflegefilme im Sinne der vorliegenden Erfindung bekannt.

Umso überraschender waren die Versuche im Rahmen der vorliegenden Erfindung, die ergaben, daß für ein Beschichtungssystem, enthaltend eine oder mehrere naßchemisch nicht entfernbare Basis-Schichten eines bestimmten Typs und eine darauf aufgetragene naßchemisch einfach entfernbare, für sich betrachtet verfärbungsanfällige Pflege- oder Opferschicht kaum oder keine Verfärbungsanfälligkeit vorlag.

Dementsprechend ist Gegenstand der vorliegenden Erfindung ein Beschichtungssystem für Fußböden, enthaltend
a) ein oder mehrere Mittel, in denen zusammen oder getrennt eine Polymer-Wachs-Dispersion und Aziridin und gewünschtenfalls eine Mattierungskomponente vorliegen, zum Auftragen auf dem Fußboden, um einen vernetzten naßchemisch nicht entfernbaren Basis-Film zu bilden, sowie
b) ein Aziridin-freies Mittel, enthaltend übliche Fußboden-Pflegekomponenten, insbesondere eine Polymer-Wachs-Dispersion, zur Erzeugung eines naßchemisch entfernbaren Opferfilms auf dem genannten Basisfilm.

Vorzugsweise sind bei dem erfindungsgemäßen System unter a) zumindest zwei Mittel zu verstehen, von denen eines das genannte Aziridin und ein anderes die genannte Polymer-Wachs-Dispersion enthält.

In einer besonders bevorzugten Ausführungsform des erfindungsgemäßen Systems sind unter a) sogar zumindest drei Mittel zu verstehen, von denen ein erstes das genannte Aziridin, ein zweites die genannte Polymer-Wachs-Dispersion und ein drittes die genannte Mattierungskomponente enthält.
Unter Mattierungskomponenten sind gemäß vorliegender Erfindung vorzugsweise diejenigen zu verstehen, die ausgewählt sind aus der großen Gruppe der Kieselsäureverbindungen. Für den Fachmann sind dies solche, die beispielsweise von den Firmen Clariant, BYK CERA, Klein-Additec angeboten werden.

Die zusätzliche Zugabe der Mattierungkomponente kann aus verschiedenen Gründen von Vorteil sein. In dem sensiblen Anwendungsbereich der vorliegenden Erfindung kann hoher Glanz ein Problem darstellen. Fälschlicherweise wird Glanz häufig mit Glätte verwechselt. Hinzu kommt, daß Verfleckungen im und auf dem Pflegefilm durch Glanz besonders hervorgehoben werden.
Oft wird versucht, durch Einarbeitung von Mattierungsmitteln dem Verbraucherwunsch nach weniger Glanz zu entsprechen. Jedoch sind alle bisher auf dem Markt befindlichen Produkte, die Mattierungsmittel enthalten, nicht lagerstabil. Aufgrund der geringen Viskosität der Polymerdispersionen rahmen die Mattierungsmittel auf, klumpen zum Teil oder setzen sich am Boden ab. Die Produkte werden überwiegend in 10 L Gebinden angeboten, so daß eine ausreichende Homogenisierung durch Schütteln des Gebindes nicht stattfindet.

In der Dienstleistungsbranche ist es außerdem unüblich, Rührwerke zum Homogenisieren einzusetzen, wie dies z.B. bei den Boden- und Parkettverlegern üblich ist, wo häufiger mehrkomponentige Systeme beispielsweise auch mit Mattierungsmitteln vor Ort direkt verarbeitet werden.
Deshalb ist es im Sinne der vorliegenden Erfindung von Vorteil, die Mattierungskomponente gewünschtenfalls in Form eines separaten Mittels zur Verfügung zu stellen und nur bei Bedarf zu benutzen.

Vorzugsweise sind bei dem erfindungsgemäßen System die Volumen der Gebinde, in denen die unter a) genannten Mittel abgefüllt sind, so gewählt, daß bei Vermischen der vollständigen Inhalte der Gebinde ein Gemisch vorliegt, das genau das für die Bildung des oder der Basisfilme gewünschte Verhältnis der für die gemäß dem erfindungsgemäßen System wesentlichen Komponenten aufweist.
Dabei ist es besonders bevorzugt, wenn das Volumen von einem der genannten, vorzugsweise demjenigen, in dem sich das volumenmäßig größte Mittel befindet, so gewählt ist, daß ausreichend Platz vorliegt, um die Inhalte des oder der weiteren genannten Gebinde unterzubringen und die gewünschte Mischung herzustellen.
Es ist weiterhin bevorzugt, daß in dem erfindungsgemäßen System wenigstens zwei der Mittel a) und/oder b) übliche Fußboden-Pflegekomponenten, ausgewählt aus der Gruppe Wachse, Tenside, filmbildende Polymere und deren Gemische enthalten, wobei insbesondere filmbildende Polymere mit einer minimalen Filmbildetemperatur zwischen 0 und 90 °C enthalten sind.
Vorzugsweise ist das genannte filmbildende Polymer ausgewählt aus Polyurethanen und/oder Polycarboxylaten, insbesondere aus Polyacrylaten.

Es ist weiterhin bevorzugt, daß unter a) mehrere Mittel zu verstehen sind, wobei eines davon frei von Aziridin ist und eine Polymer-Wachs-Dispersion enthält und mit der Rezeptur von Mittel b) identisch ist.

Für das erfindungsgemäße System ist es ebenfalls bevorzugt, daß eines oder mehrere der Mittel a) und/oder b) Tenside enthalten, wobei der Gesamtgehalt an Tensiden, bezogen auf das jeweilige Mittel a) und/oder b), vorzugsweise 1 bis 35 Gew.%, besonders bevorzugt 3 bis 10 Gew.% beträgt. Der Gesamtgehalt ist so zu verstehen, daß sich dieser nur auf eines der tensidhaltigen Mittel und nicht die Summe aller erfindungsgemäß vorliegenden Mittel bezieht.

Ganz besonders bevorzugt sind die Tenside dabei ausgewählt aus nichtionischen Tensiden, insbesondere Alkylpolyglukosiden, und aus anionischen Tensiden, insbesondere aus der Gruppe der Alkylsulfate, Alkansulfonate, Olefinsulfonate, Ethersulfate, Seifen, Fluortenside, Silikontenside und deren Mischungen.

Ein weiterer Gegenstand der vorliegenden Erindung ist ein Verfahren zur Behandlung von erfindungsgemäß vorliegenden Beschichtungssystemen mit Reinigungs- und/oder Desinfektionsmitteln, enthaltend eine oder mehrere antimikrobielle Komponenten, ausgewählt aus der Gruppe der Alkohole, Aldehyde, antimikrobiellen Säuren, Carbonsäureester, Säureamide, Phenole, Phenolderivate, Diphenyle, Diphenylalkane, Hamstoffderivate, Sauerstoff-, Stickstoff-Acetale sowie -Formale, Benzamidine, Isothiazoline, Phthalimidderivate, Pyridinderivate, antimikrobiellen oberflächenaktiven Verbindungen, quartäre Ammoniumverbindungen, antimikrobiellen Alkylamine, Guanidine, antimikrobiellen amphoteren Verbindungen, Chinoline, 1,2-Dibrom-2,4-dicyanobutan, Iodo-2-propinyl-butyl-carbamat, lod, lodophore, Peroxide.
Dabei ist es besonders bevorzugt, wenn die Reinigungs- und/oder Desinfektionsmittel eine oder mehrere antimikrobielle Komponenten, ausgewählt aus der Gruppe der quartären Ammoniumverbindungen, Alkylamine und Glucoprotamin® enthalten und insbesondere die genannten antimikrobiellen Komponenten ausgewählt sind aus der Gruppe der Alkylpropylendiamine mit der allgemeinen Formel I 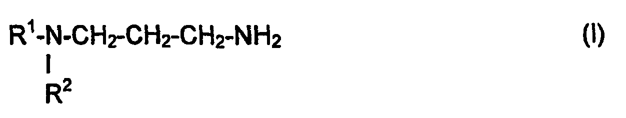
worin R¹ eine Alkyl- oder Alkenylgruppe mit 8 bis 18 Kohlenstoffatomen und R² Wasserstoff, eine Alkylgruppe mit 1 bis 4 Kohlenstoffatomen oder eine Aminoalkylgruppe mit 2 bis 4 Kohlenstoffatomen bedeuten, und
der als Glucoprotamin® bekannten Produkte, wie sie aus Alkylpropylendiamin der Formel II

R³-NH-CH₂-CH₂-CH₂-NH₂ (II)

in der R³ für eine lineare Alkylgruppe mit 12 bis 14 Kohlenstoffatomen steht, durch Umsetzung mit Verbindungen der Formel III

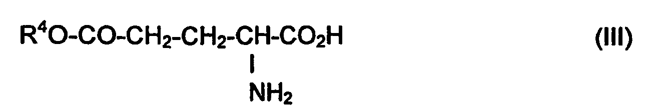

in der R⁴ für Wasserstoff oder eine Akylgruppe mit 1 bis 4 Kohlenstoffatomen steht, im Molverhältnis 1 : 1 bis 1 : 2 bei 60 bis 175°C zugänglich sind.
Noch mehr bevorzugt ist es, wenn die genannten antimikrobiellen Komponenten ausgewählt sind aus Glucoprotamin®, N,N-Bis(3-aminopropyl)-laurylamin, N-Dodecyl-1,3-propandiamin, N-Kokos-1,3-propandiamin oder einem Gemisch hieraus, wobei im Spezialfall die genannte antimikrobielle Komponente Glucoprotamin® ist.

Vorzugsweise wird durch das erfindungsgemäße Verfahren erreicht, daß das Ausmaß an Vergilbung und/oder Verfleckung gegenüber dem bei üblichen Beschichtungssystemen mit naßchemisch entfernbarer Opferschicht auftretenden Ausmaß verringert ist. Die Erfindung faßt im Folgenden die auftretenden visuell erkennbaren Veränderungen der Oberfläche, wie Vergilbung und/oder Verfleckung allgemein unter dem Begriff Verfärbungen zusammen.

Ein weiterer Gegenstand der vorliegenden Erfindung ist ein Verfahren zur Beschichtung von Fußböden, bei dem in einem Verfahrensschritt ein Basisfilm, enthaltend Aziridin-vernetzte Polymere, gewünschtenfalls vermischt mit Mattierungskomponenten, aufgetragen wird und nach dem Trocknen in einem weiteren Schritt unmittelbar auf den genannten Basisfilm ein Opferfilm, enthaltend übliche Pflegekomponenten für Fußböden, insbesondere eine Polymer-Wachs-Dispersion, aufgetragen wird. Dabei ist der Gegenstand so zu verstehen, daß es durchaus möglich ist, daß unter dem Basisfilm noch andere Beschichtungen aufgetragen sind. Wesentlich im Sinne der vorliegenden Erfindung ist, daß als Basisfilm der Film zu verstehen ist, der als Basis für den nicht-Aziridin-vernetzten Opfer oder Pflegefilm dient.

Bei dem erfindungsgemäßen Verfahren ist es bevorzugt, daß
i) vor dem Auftragen des genannten Basisfilms die entsprechend dem erfindungsgemäßen System vorliegenden Mittel in Gebinden abgefüllt sind, deren Volumen so gewählt ist, daß bei Vermischen der vollständigen Inhalte der Gebinde ein Gemisch vorliegt, das genau das für die Bildung des Basisfilms gewünschte Verhältnis der wesentlichen Komponenten entsprechend dem erfindungsgemäßen System aufweist, und
j) die Mittel durch Zusammenbringen und Vermischen der gesamten Inhalte der genannten Gebinde für das Auftragen des genannten Basisfilms vorbereitet werden.

Vorzugsweise wird dabei das Zusammenbringen und Vermischen der gesamten Inhalte der genannten Gebinde in einem der genannten Gebinde, besonders bevorzugt in demjenigen, in dem sich das volumenmäßig größte Mittel befindet, durchgeführt.

Wenn unter a) mehrere Mittel zu verstehen sind, von denen eines erfindungsgemäß mit b) identisch ist, besteht vorzugsweise die Möglichkeit, auf ein Gebinde zu verzichten. In diesem Fall würde für die Basisbeschichtung ein erster Teil des mit a) identischen Mittels b) mit den weiteren Mitteln a), nämlich den Aziridin und/oder gewünschtenfalls Mattierungskomponenten enthaltenden Mitteln zusammengemischt und aufgetragen. Nach dem Trocknen des Basisfilms könnte dann der restliche Teil von dem mit a) identischen Mittel b) teilweise oder ganz als Opferschicht aufgetragen werden.

Ebenfalls Gegenstand der vorliegenden Erfindung ist eine Bodenbeschichtung, bei der direkt auf einen Basisfilm, enthaltend Aziridin-vernetzte Polymere und gewünschtenfalls eine Mattierungskomponente, ein Opferfilm, enthaltend übliche Pflegekomponenten für Fußböden und vorzugsweise antimikrobielle Komponenten, aufgetragen ist.

### Beispiele

In mehreren Versuchsserien wurde die Beeinflussung des Aussehens unterschiedlicher Beschichtungssysteme bei regelmäßiger Behandlung mit Desinfektionsmittel-Lösungen untersucht.

**Tabelle 1: Inhaltsstoffe der Beschichtungsformulierungen [in Gew.-%]**

| Inhaltsstoff | B1 | B2 | B3 |
|---|---|---|---|
| Zn-vernetztes Polyacrylat | - | 20 | - |
| Unvernetztes Polyacrylat | 18 | - | - |
| Aziridin-vernetztes Polyacrylat | - | - | 19 |
| Wachsdispersion auf Polyethylen/Polypropylen-Basis | 3 | 3 | 3 |
| Polyurethan-Dispersion | 2 | 2 | 2 |
| Niotensid: Fettalkohol mit 6 - 7 EO-Gruppen | 2 | 2 | 2 |
| Rest auf 100 Gew.%: Wasser und weitere übliche Stoffe* für Bodenbeschichtungsmittel | | | |

| | | | |
|---|---|---|---|
| *beispielsweise permanente-Weichmacher (ggf. Tributoxyethylphosphat), temporäre Weichmacher (wie Ethyldigluykol), Verfaufshilfsmittel (wie nichtionische Tenside oder sonstige Netzmittel) | | | |

Die unterschiedlichen zu prüfenden Bodenbeschichtungssysteme wurden durch Verwendung der Bodenbeschichtungsformulierungen B1 bis B3 gemäß Tabelle 1 hergestellt. Zur Herstellung der Bodenbeschichtungssysteme wurden die Bodenbeschichtungsformulierungen B1 bis B3 alleine oder übereinander in Mengen von jeweils 10 ml mit Hilfe eines Handauftragegerätes auf 30 cm x 60 cm großen PVC-Platten gleichmäßig verteilt. Für den Fall, daß mehrere Beschichtungen übereinander aufgetragen wurden, wurde vor dem Auftragen der weiteren Beschichtung darauf geachtet, daß der bereits vorhandene Beschichtungsfilm ausreichend Zeit zum Trocknen hatte. Die auf diese Weise vorbereiteten Beschichtungssysteme sind in Tabelle 2 zusammengestellt.

**Tabelle 2: Beschichtungssysteme für die Durchführung der Versuche**

| **Beschichtungs-System** | **Art der Beschichtung** |
|---|---|
| V1 | Nur ein Beschichtungsfilm: B1 |
| V2 | Nur ein Beschichtungsfilm: B2 |
| V3 | Drei Beschichtungsfilme B1 |
| V4 | Zwei Beschichtungsfilme: B1; darüber ein Beschichtungsfilm: B2 |
| V5 | Drei Beschichtungsfilme: B2 |
| V6 | Nur ein Beschichtungsfilm: B3 |
| E1 | Zwei Beschichtungsfilme: B3; darüber ein Beschichtungsfilm: B2 |

Die mit den jeweiligen Bodenbeschichtungsformulierungen beschichteten PVC-Platten wurden doppelt angesetzt und bei 40 °C in einer Dunkelkammer gelagert.
Eine erste Serie der so gelagerten Prüfobjekte wurde dreimal pro Tag in etwa zweistündigem Abstand in der Dunkelkammer mit einer Flächendesinfektionsmittellösung gewischt, in der als antimikrobielle Komponente Glucoprotamin® in einer Konzentration von 0,25 Gew.% bezogen auf die gesamte Lösung vorlag.
Eine zweite Serie der so gelagerten Prüfobjekte wurde dreimal pro Tag in etwa zweistündigem Abstand in der Dunkelkammer mit einer Flächendesinfektionsmittellösung gewischt, in der als antimikrobielle Komponenten Dimethyalkyl(C12-14)benzylammoniumchlorid (Benzalkon) in einer Konzentration von 0,15 Gew.% und Polyhexamethylenbiguanid in einer Konzentration von 0,05 Gew.% bezogen auf die gesamte Lösung vorlagen.

Nach 70 Tagen wurden die Prüfobjekte aus der Dunkelkammer entnommen und die Vergilbung durch geschultes Fachpersonal visuell bewertet.

Dabei reichte die Bewertungsskala von -5 (= sehr starke Verfärbung) bis hin zu 0 (keinerlei Verfärbung).

Die Ergebnisse sind aus Tabelle 3 zu entnehmen.

**Tabelle 3: Bewertung der Verfärbung der Beschichtungssysteme aus Tabelle 2 nach 70 Tagen Lagerung in der Dunkelkammer bei 40 °C und regelmäßiger Behandlung mit Desinfektionsmittel-Lösungen**

| **Beschichtungs-System** | **Verfärbung nach Behandlung mit Glucoprotamin-Lösung** | **Verfärbung nach Behandlung mit Benzalkon/Biguanid-Lösung** |
|---|---|---|
| V1 | -5 | -4 |
| V2 | -5 | -5 |
| V3 | -5 | -4 |
| V4 | -5 | -4 |
| V5 | -5 | -5 |
| V6 | 0 | 0 |
| E1 | -1 | -1 |

Bei den Versuchen zeigte sich, daß der Aziridin-vernetzte Beschichtungsflim nicht anfällig gegenüber den im Versuch vorliegenden Bedingungen war und zu keinerlei Verfärbung führte.

Völlig überraschend war jedoch die Tatsache, daß bei dem erfindungsgemäßen Beispiel E1 die Verfärbungsanfälligkeit der äußeren Beschichtung (Opferschicht) so gering war. Dies konnte nicht erwartet werden, da die bei E1 vorliegende Opferschicht, wie in den übrigen Versuchen gezeigt wurde, unter den gewählten Bedingungen stark zur Verfärbung neigte. Die Tatsache, daß direkt unter der Opferschicht eine oder mehrere Aziridin-vernetzte Beschichtungsfilme (Basis-Schicht) vorliegen, konnte nicht zu der Annahme führen, daß dadurch die Anfälligkeit der Opferschicht reduziert würde.

## Patentansprüche

1. Beschichtungssystem für Fußböden, enthaltend
a) ein oder mehrere Mittel, in denen zusammen oder getrennt eine Polymer-Wachs-Dispersion und Aziridin und gewünschtenfalls eine Mattierungskomponente vorliegen, zum Auftragen auf dem Fußboden, um einen vernetzten naßchemisch nicht entfernbaren Basis-Film zu bilden, sowie
b) ein Aziridin-freies Mittel, enthaltend übliche Fußboden-Pflegekomponenten, insbesondere eine Polymer-Wachs-Dispersion, zur Erzeugung eines naßchemisch entfernbaren Opferfilms auf dem genannten Basisfilm.

2. System nach Anspruch 1, **dadurch gekennzeichnet, daß** unter a) zumindest zwei Mittel zu verstehen sind, von denen eines das genannte Aziridin und ein anderes die genannte Polymer-Wachs-Dispersion enthält.

3. System nach einem der Ansprüche 1 oder 2, **dadurch gekennzeichnet, daß** unter a) zumindest drei Mittel zu verstehen sind, von denen ein erstes das genannte Aziridin, ein zweites die genannte Polymer-Wachs-Dispersion und ein drittes die genannte Mattierungskomponente enthält.

4. System nach einem der Ansprüche 2 oder 3, **dadurch gekennzeichnet, daß** das Volumen der Gebinde, in denen die genannten Mittel abgefüllt sind, so gewählt ist, daß bei Vermischen des vollständigen Inhalts der Gebinde ein Gemisch vorliegt, das genau das für die Bildung des Basisfilms gewünschte Verhältnis der wesentlichen Komponenten gemäß Anspruch 2 oder 3 aufweist.

5. System nach Anspruch 4, **dadurch gekennzeichnet, daß** das Volumen von einem der genannten Gebinde, vorzugsweise demjenigen, in dem sich das volumenmäßig größte Mittel befindet, so gewählt ist, daß ausreichend Platz vorliegt, um den Inhalt des oder der weiteren genannten Gebinde unterzubringen und die gewünschte Mischung herzustellen.

6. System nach einem der Ansprüche 1 bis 5, **dadurch gekennzeichnet, daß** wenigstens zwei der Mittel a) und/oder b) übliche Fußboden-Pflegekomponenten, ausgewählt aus der Gruppe Wachse, Tenside, filmbildende Polymere und deren Gemischen enthalten.

7. System nach Anspruch 6, **dadurch gekennzeichnet, daß** unter a) mehrere Mittel zu verstehen sind und eines derselben frei von Aziridin ist und eine Polymer-Wachs-Dispersion enthält und rezepturgemäß identisch mit dem Mittel b) ist.

8. System nach einem der Ansprüche 6 oder 7, **dadurch gekennzeichnet, daß** eines oder mehrere der Mittel a) und/oder b) Tenside enthalten, wobei der Gesamtgehalt an Tensiden, bezogen auf das oder die betroffenen Mittel a) und/oder b), 1 bis 35 Gew.-%, vorzugsweise 3 bis 10 Gew.% beträgt.

9. System nach einem der Ansprüche 6 bis 8, **dadurch gekennzeichnet, daß** wenigstens zwei der Mittel a) und/oder b) filmbildende Polymere enthalten, wobei deren minimale Filmbildetemperatur zwischen 0 und 90 °C liegt.

10. System nach Anspruch 9, **dadurch gekennzeichnet, daß** das genannte filmbildende Polymer ausgewählt ist aus Polyurethanen und/oder Polycarboxylaten, insbesondere aus Polyacrylaten.

11. System nach einem der Ansprüche 1 bis 10, **dadurch gekennzeichnet, daß** das oder die Mittel a) eine Mattierungskomponente ausgewählt aus den Kieselsäureverbindungen enthält.

12. Verfahren zur Behandlung von Beschichtungssystemen gemäß einem der Ansprüche 1 bis 11 mit Reinigungs- und/oder Desinfektionsmitteln, enthaltend eine oder mehrere antimikrobielle Komponenten, ausgewählt aus der Gruppe der Alkohole, Aldehyde, antimikrobiellen Säuren, Carbonsäureester, Säureamide, Phenole, Phenolderivate, Diphenyle, Diphenylalkane, Harnstoffderivate, Sauerstoff-, Stickstoff-Acetale sowie -Formale, Benzamidine, Isothiazoline, Phthalimidderivate, Pyridinderivate, antimikrobiellen oberflächenaktiven Verbindungen, quartäre Ammoniumverbindungen, antimikrobiellen Alkylamine, Guanidine, antimikrobiellen amphoteren Verbindungen, Chinoline, 1,2-Dibrom-2,4-dicyanobutan, lodo-2-propinyl-butyl-carbamat, Iod, lodophore, Peroxide.

13. Verfahren nach Anspruch 12, **dadurch gekennzeichnet, daß** die genannten antimikrobiellen Komponenten ausgewählt sind aus der Gruppe der Alkylpropylendiamine mit der allgemeinen Formel I 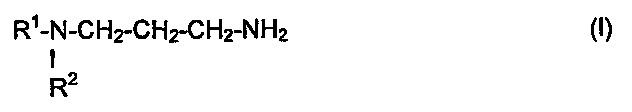
worin R¹ eine Alkyl- oder Alkenylgruppe mit 8 bis 18 Kohlenstoffatomen und R² Wasserstoff, eine Alkylgruppe mit 1 bis 4 Kohlenstoffatomen oder eine Aminoalkylgruppe mit 2 bis 4 Kohlenstoffatomen bedeuten, und
der als Glucoprotamin® bekannten Produkte, wie sie aus Alkylpropylendiamin der Formel II
R³-NH-CH₂-CH₂-CH₂-NH₂ (II)
in der R³ für eine lineare Alkylgruppe mit 12 bis 14 Kohlenstoffatomen steht, durch Umsetzung mit Verbindungen der Formel III 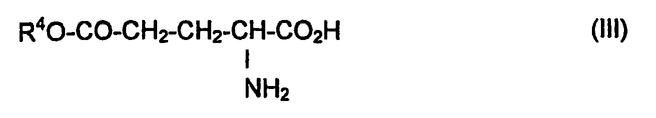
in der R⁴ für Wasserstoff oder eine Akylgruppe mit 1 bis 4 Kohlenstoffatomen steht, im Molverhältnis 1 : 1 bis 1 : 2 bei 60 bis 175°C zugänglich sind.

14. Verfahren nach einem der Ansprüche 12 oder 13, **dadurch gekennzeichnet, daß** das Ausmaß an Vergilbung und/oder Verfleckung gegenüber dem bei üblichen Beschichtungssystemen mit einer naßchemisch entfernbaren Opferschicht auftretenden Ausmaß verringert ist.

15. Verfahren zur Beschichtung von Fußböden, bei dem in einem Verfahrensschritt ein Basisfilm, enthaltend Aziridin-vernetzte Polymere, gewünschtenfalls vermischt mit Mattierungskomponenten, aufgetragen wird und nach dem Trocknen in einem weiteren Schritt direkt auf den genannten Basisfilm ein Opferfilm, enthaltend übliche Pflegekomponenten für Fußböden, insbesondere eine Polymer-Wachs-Dispersion, aufgetragen wird.

16. Verfahren nach Anspruch 15, **dadurch gekennzeichnet, daß**
i) vor dem Auftragen des genannten Basisfilms die gemäß Anspruch 4 vorliegenden Mittel in Gebinden abgefüllt sind, deren Volumen so gewählt ist, daß bei Vermischen des vollständigen Inhalts der Gebinde ein Gemisch vorliegt, das genau das für die Bildung des Basisfilms gewünschte Verhältnis der wesentlichen Komponenten gemäß einem der Anspruch 2 oder 3 aufweist, und
j) die Mittel durch Zusammenbringen und Vermischen des gesamten Inhalts der genannten Gebinde für das Auftragen des genannten Basisfilms vorbereitet werden.

17. Verfahren nach Anspruch 16, **dadurch gekennzeichnet, daß** das Zusammenbringen und Vermischen des gesamten Inhalts der genannten Gebinde in einem der genannten Gebinde, vorzugsweise demjenigen mit dem volumenmäßig größten Inhalt, stattfindet.

18. Bodenbeschichtung, bei der direkt auf einen Basisfilm, enthaltend Aziridin-vernetzte Polymere und gewünschtenfalls eine Mattierungskomponente, ein Opferfilm, enthaltend übliche Pflegekomponenten für Fußböden und vorzugsweise antimikrobielle Komponenten, aufgetragen ist.

## Claims

1. A coating system for floors, including
a) one or more agents, which agents have a polymer-wax dispersion and aziridine, jointly or separately, and, if desired, a matting component present therein, for application on a floor so as to form a base film that cannot be removed by wet-chemical means, and
b) an agent free of aziridine, including standard floor care components, particularly a polymer-wax dispersion, to produce a wet-chemically removable sacrificial film on said base film.

2. The system according to claim 1, **characterized in that** a) is understood to comprise at least two agents, one of which including said aziridine and another one including said polymer-wax dispersion.

3. The system according to any of claims 1 or 2, **characterized in that** a) is understood to comprise at least three agents, a first one including said aziridine, a second one including said polymer-wax dispersion, and a third one including said matting component.

4. The system according to any of claims 2 or 3, **characterized in that** the volume of the packages filled with the above-mentioned agents is selected in such a way that mixing the complete contents of the packages results in a mixture having precisely the ratio of essential components in accordance with claim 2 or 3 desired for formation of the base film.

5. The system according to claim 4, **characterized in that** the volume of one of the above-mentioned packages, preferably the one holding the agent with the largest volume, is selected in such a way that sufficient space is available to accommodate the contents of said one or more additional packages and produce the desired mixture.

6. The system according to any of claims 1 to 5, **characterized in that** at least two of said agents a) and/or b) include standard floor care components selected from the group of waxes, surfactants, film-forming polymers and mixtures thereof.

7. The system according to claim 6, **characterized in that** a) is understood to comprise a plurality of agents, one of them being free of aziridine, including a polymer-wax dispersion and being identical with agent b) with respect to the formulation.

8. The system according to any of claims 6 or 7, **characterized in that** one or more of said agents a) and/or b) include surfactants, the overall content of surfactants, relative to the respective agent(s) a) and/or b), being from 1 to 35 wt.-%, preferably from 3 to 10 wt.-%.

9. The system according to any of claims 6 to 8, **characterized in that** at least two of said agents a) and/or b) include film-forming polymers, the minimum film formation temperature of which being between 0 and 90°C.

10. The system according to claim 9, **characterized in that** the film-forming polymer is selected from polyurethanes and/or polycarboxylates, particularly from polyacrylates.

11. The system according to any of claims 1 to 10, **characterized in that** the agent(s) a) include(s) a matting component selected from silicic acid compounds.

12. A method of treating coating systems according to claims 1 to 11 with cleaning agents and/or disinfectants including one or more antimicrobial components selected from the group of alcohols, aldehydes, antimicrobial acids, carboxylic esters, amides, phenols, phenol derivatives, diphenyls, diphenylalkanes, urea derivatives, oxygen and nitrogen acetals and formals, benzamidines, isothiazolines, phthalimide derivatives, pyridine derivatives, antimicrobial surface-active compounds, quaternary ammonium compounds, antimicrobial alkylamines, guanidines, antimicrobial amphoteric compounds, quinolines, 1,2-dibromo-2,4-dicyanobutane, iodo-2-propynylbutyl carbamate, iodine, iodophors, and peroxides.

13. The method according to claim 12, **characterized in that** the above-mentioned antimicrobial components are selected from the group of alkylpropylenediamines of general formula I 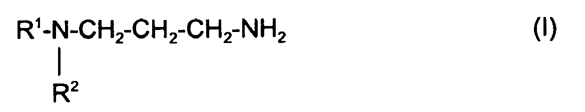
wherein R¹ represents an alkyl or alkenyl group with 8 to 18 carbon atoms and R² represents hydrogen, an alkyl group with 1 to 4 carbon atoms or an aminoalkyl group with 2 to 4 carbon atoms, and
from the products known as Glucoprotamin®, as obtainable from an alkylpropylenediamine of formula II
R³-NH-CH₂-CH₂-CH₂-NH₂ (II)
wherein R³ represents a linear alkyl group with 12 to 14 carbon atoms, by reaction with compounds of formula III 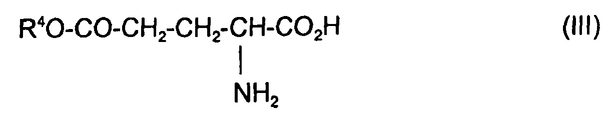
wherein R⁴ represents hydrogen or an alkyl group with 1 to 4 carbon atoms, at a molar ratio of from 1:1 to 1:2 at 60 to 175°C.

14. The method according to any of claims 12 or 13, **characterized in that** the extent of yellowing and/or staining is reduced compared to the extent seen in conventional coating systems with a wet-chemically removable sacrificial layer.

15. A method of coating floors, wherein a base film including aziridine-crosslinked polymers, mixed with matting components, if desired, is coated in one process step and, following drying, a sacrificial film including standard floor care components, particularly a polymer-wax dispersion, is coated directly on said base film in a further step.

16. The method according to claim 15, **characterized in that**
i) prior to coating said base film, the agents available according to claim 4 are filled in packages, the volume of which is selected in such a way that mixing the complete contents of the packages results in a mixture having precisely the ratio of essential components in accordance with claim 2 or 3 desired for formation of the base film, and
j) the agents are prepared for coating said base film by contacting and mixing the complete contents of said packages.

17. The method according to claim 16, **characterized in that** contacting and mixing the complete contents of said packages takes place in one of said packages, preferably in the one having the largest contents by volume.

18. A floor coating wherein a sacrificial film including standard floor care components and preferably antimicrobial components is coated directly on a base film including aziridine-crosslinked polymers and, if desired, a matting component.

## Revendications

1. Système de revêtement pour sols, contenant :
a) un ou plusieurs agent(s) dans lesquels sont présents, ensemble ou séparément, une dispersion de cire polymère et de l'aziridine et, si on le souhaite, un composant matifiant, à appliquer sur le sol pour former un film de base réticulé que l'on ne peut pas enlever par voie chimique humide, ainsi que
b) un agent sans aziridine, contenant des composants d'entretien usuels pour les sols, en particulier une dispersion de cire polymère afin de produire un film sacrificiel, que l'on peut enlever par voie chimique humide, sur le film de base.

2. Système selon la revendication 1,
**caractérisé en ce que**
par a), il faut entendre au moins deux agents dont un contient l'aziridine indiquée et un autre la dispersion de cire polymère indiquée.

3. Système selon l'une quelconque des revendications 1 ou 2,
**caractérisé en ce que**
par a), il faut entendre au moins trois agents dont un premier contient l'aziridine indiquée, un deuxième la dispersion de cire polymère indiquée et un troisième le composant matifiant indiqué.

4. Système selon l'une quelconque des revendications 2 ou 3,
**caractérisé en ce que**
le volume des contenants dans lesquels les agents indiqués sont versés, est choisi de manière à ce que, lors du mélange du contenu entier du contenant, on obtienne un mélange qui présente précisément le rapport, souhaité pour la formation du film de base, entre les composants essentiels selon la revendication 2 ou 3.

5. Système selon la revendication 4,
**caractérisé en ce que**
le volume de l'un des composants indiqués, de préférence celui dans lequel se trouve le plus grand volume d'agent, est choisi de manière à ce qu'il y ait suffisamment de place pour loger le contenu du ou des autres contenant(s) indiqués et pour fabriquer le mélange souhaité.

6. Système selon l'une quelconque des revendications 1 à 5,
**caractérisé en ce qu'**
au moins deux des agents a) et/ou b) contiennent des composants d'entretien pour sols usuels, choisis dans le groupe constitué de cires, de tensioactifs, de polymères filmogènes et de leurs mélanges.

7. Système selon la revendication 6,
**caractérisé en ce que**
par a) il faut entendre plusieurs agents et un de ceux-ci est exempt d'aziridine et contient une dispersion de cire polymère et a la même formulation que l'agent b).

8. Système selon l'une quelconque des revendications 6 ou 7,
**caractérisé en ce qu'**
un ou plusieurs des agents a) et/ou b) contiennent des tensioactifs, la teneur totale en tensioactifs, par rapport au ou aux agent(s) a) et/ou b) concerné(s), représentant 1 à 35 % en poids, de préférence 3 à 10 % en poids.

9. Système selon l'une quelconque des revendications 6 à 8,
**caractérisé en ce qu'**
au moins deux des agents a) et/ou b) contiennent des agents filmogènes, la température minimale de formation d'un film de ces agents étant comprise entre 0 et 90°C.

10. Système selon la revendication 9,
**caractérisé en ce que**
le polymère filmogène indiqué est choisi parmi des polyuréthanes et/ou des polycarboxylates, en particulier des polyacrylates.

11. Système selon l'une quelconque des revendications 1 à 10,
**caractérisé en ce que**
le ou les agent(s) a) contien(nen)t un composant matifiant choisi parmi les composés d'acide silicique.

12. Procédé de traitement de systèmes de revêtement selon l'une quelconque des revendications 1 à 11, avec des agents de nettoyage et/ou de désinfection contenant un ou plusieurs composant(s) antimicrobien(s), choisi(s) dans le groupe des alcools, des aldéhydes, des acides antimicrobiens, des esters de l'acide carboxylique, des amides acides, des phénols, des dérivés de phénol, des diphényles, des diphénylalcanes, des dérivés de l'urée, des acétals et formals d'oxygène, d'azote, des benzamidines, des isothiazolines, des dérivés de phtalimide, des dérivés de pyridine, des composés tensioactifs antimicrobiens, des composés d'ammonium quaternaire, des alkylamines antimicrobiennes, des guanidines, des composés amphotères antimicrobiens, des quinolines, du 1,2-dibromo-2,4-dicyanobutane, du iodo-2-propinyl-butyl-carbamate, d'iode, d'iodophores et de peroxydes.

13. Procédé selon la revendication 12,
**caractérisé en ce que**
les composants antimicrobiens indiqués sont choisis dans le groupe des alkylpropylènediamines de formule générale I 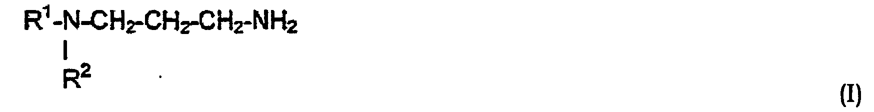
dans laquelle R¹ représente un groupe alkyle ou alcényle portant 8 à 18 atomes de carbone et R² un atome d'hydrogène, un groupe alkyle portant 1 à 4 atomes de carbone ou un groupe aminoalkyle portant 2 à 4 atomes de carbone, et
parmi les produits connus sous le nom de glucoprotamine®, tels que ceux que l'on peut obtenir à partir d'alkylpropylènediamine de formule II
R³-NH-CH₂CH₂CH₂NH₂ (II)
dans laquelle R³ représente un groupe alkyle linéaire portant 12 à 14 atomes de carbone, par conversion avec des composés de formule III 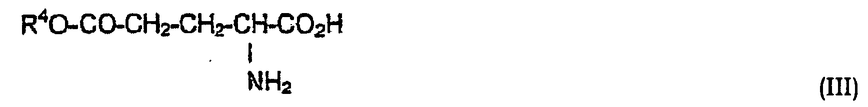
dans laquelle R⁴ représente un atome d'hydrogène ou un groupe alkyle portant 1 à 4 atomes de carbone, dans un rapport molaire de 1:1 à 1:2 à une température de 60 à 175°C.

14. Procédé selon l'une quelconque des revendications 12 ou 13,
**caractérisé en ce que**
l'étendue du jaunissement et/ou de l'apparition de taches sont réduites par rapport à celle des systèmes de revêtement usuels comportant une couche sacrificielle pouvant être enlevée par voie humide.

15. Procédé pour le revêtement de sols dans lequel on applique, dans une étape, un film de base contenant des polymères réticulés à l'aziridine, si on le souhaite mélangés à des composants matifiants et on applique directement sur le film de base indiqué, dans une autre étape, après le séchage, un film sacrificiel contenant des composants d'entretien des sols usuels, en particulier une dispersion de cire polymère.

16. Procédé selon la revendication 15,
**caractérisé en ce que**
i) avant d'appliquer le film de base indiqué, on verse les agents présents selon la revendication 4, dans des contenants dont le volume est choisi de manière à ce que, lors du mélange de tout le contenu des contenants, il y ait un mélange qui présente précisément le rapport, souhaité pour la formation du film de base, entre les composants essentiels selon l'une quelconque des revendications 2 ou 3, et
j) on prépare les agents en regroupant et en mélangeant le contenu entier des contenants indiqués pour l'application du film de base indiqué.

17. Procédé selon la revendication 16,
**caractérisé en ce que**
le regroupement et le mélange du contenu entier des contenants cités se déroulent dans l'un des contenants indiqués, de préférence dans celui ayant la plus grande contenance.

18. Revêtement de sol, pour lequel on applique un film sacrificiel, contenant des composants d'entretien pour sols usuels et de préférence des composants antimicrobiens, directement sur un film de base contenant des polymères réticulés à l'aziridine et, si on le souhaite, un composant matifiant.
